Europäisches Patentamt

European Patent Office

Office européen des brevets

(19)

(11) **EP 1 223 558 A2**

(12) **EUROPEAN PATENT APPLICATION**

(43) Date of publication:
**17.07.2002 Bulletin 2002/29**

(51) Int Cl.⁷: **G06T 15/00**

(21) Application number: **01130622.2**

(22) Date of filing: **27.12.2001**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **28.12.2000 JP 2000402384**

(71) Applicant: **MATSUSHITA ELECTRIC INDUSTRIAL
CO., LTD.
Kadoma-shi, Osaka 571-8501 (JP)**

(72) Inventors:
 • **Yuda, Masato
   Osaka-shi, Osaka-fu (JP)**

 • **Asahara, Shigeo
   Ikeda-shi, Osaka-fu (JP)**
 • **Nishimura, Kenji
   Mie-ken (JP)**
 • **Araki, Hitoshi
   Yawata-shi, Kyoto-fu (JP)**
 • **Senda, Keiichi
   Takaraduka-shi, Hyogo-ken (JP)**

(74) Representative: **Lang, Johannes, Dipl.-Ing.
Bardehle Pagenberg Dost Altenburg Geissler
Isenbruck,
Postfach 86 06 20
81633 München (DE)**

(54) **Rendering device**

(57) In a rendering device (Urend1), a processor (1) receives object data (Dpol) which defines a polygon by shape, and object data (Dlin) which defines a line by shape. The processor (1) also receives mesh data (Dms) which specifies a three-dimensional mesh representing a shape of a ground surface. Based on thus received object data (Dpol) and the mesh data (Dms), the processor (1) generates intermediate data (Dlm3) which represents the polygon mapped onto the three-dimensional mesh. Further, based on the received object data (Dlin) and the mesh data (Dms), the processor (1) draws the shape of the line on the three-dimensional mesh so that display image data (Ddisp) which can display a three-dimensional image including the polygon and line drawn on the ground surface is generated. In this manner, realized is the rendering device (Urend1) capable of generating the display image data having no deformation on lines when displayed.

FIG. 1

EP 1 223 558 A2

**Description**

BACKGROUND OF THE INVENTION

Field of the Invention

The present invention relates to rendering devices and, more specifically, to rendering devices for generating display image data which represents three-dimensional images including polygons and lines.

Description of the Background Art

The above type of rendering devices have been often applied to navigation devices and game machines. As an example, described below is the navigation device which has been disclosed in United States Patent No. 5913918. In this navigation device, a map searching unit reads cartographic data of a predetermined range from a map storing unit. A processor then subjects four vertices of thus read cartographic data to perspective transformation based on eye point and focus point coordinates inputted from an input unit. The resultant coordinates are mapped onto the cartographic data, and displayed on an output unit is a three-dimensional (3D) map derived thereby.
Thus displayed 3D map represents, generally, polygonal objects typified by buildings and city blocks, and linear objects typified by roads and railroads. Such linear objects show a conspicuous difference from the polygonal objects in width. However, in spite of such a difference, the above navigation device applies the same process to the polygons and lines to map those onto the ground surface. As a result, there arises a problem that lines in the resultant 3D map which are supposed to be uniform in width appear thick in some parts, and thin in some other parts. Such a problem is not familiar only to this navigation device but also to devices which generate display image data by mapping both the polygons and lines.

SUMMARY OF THE INVENTION

Therefore, an object of the present invention is to provide rendering devices capable of generating display image data without deforming lines when displayed.
The present invention has the following features to attain the object above.
An aspect of the present invention is directed to a device for rendering a polygon and a line. The rendering device comprises an object reception section for receiving object data which defines the polygon or the line by shape, a mesh reception section for receiving mesh data which represents a shape of a surface onto which the polygon and the line are drawn, and a rendering processing section. The rendering processing section uses the object data defining the polygon received by the object reception section and the mesh data received by the mesh reception section to map the polygon onto the surface, and to draw the line on the surface, uses the object data defining the line received by the object reception section and the mesh data received by the mesh reception section.
Mapping narrow lines onto the surface results in conspicuous deformation. Therefore, in the present invention, the rendering processing section uses the object data defining the corresponding line to directly render the line on the surface. As a result, the rendering processing section becomes capable of generating display image data without deforming lines when displayed.
These and other objects, features, aspects and advantages of the present invention will become more apparent from the following detailed description of the present invention when taken in conjunction with the accompanying drawings.

BRIEF DESCRIPTION OF THE DRAWINGS

FIG. 1 is a block diagram showing the structure of a rendering device *Urend1* according to a first embodiment of the present invention;
FIG. 2 is a diagram showing temporary storage areas 31 to 34 which are reserved in a working area 3 of FIG. 1;
FIG. 3 is a diagram showing a mesh database *DBmesh* and an object database *DBobj* which are stored in a storage device *Ustor* of FIG. 1;
FIG. 4A is a schematic diagram showing a three-dimensional (3D) mesh *MS* represented by the mesh database *DBmesh* of FIG. 3;
FIG. 4B is a schematic diagram showing the data structure of the mesh database *DBmesh* of FIG. 3;
FIG. 5A is a schematic diagram showing the data structure of the object database *DBobj* of FIG. 3;

FIG. 5B is a schematic diagram showing the detailed data structure of each of object data *Dpol1* to *Dpoln* of FIG. 5A;
FIG. 5C is a schematic diagram showing an exemplary polygon *PL* represented by any of the object data *Dpol1* to *Dpoln* of FIG. 5A;
FIG. 6A is a schematic diagram showing the detailed data structure of each of object data *Dlin1* to *Dlini* of FIG. 5A;
FIG. 6B is a schematic diagram showing an exemplary line *LN* represented by any of the object data *Dlin1* to *Dlini* of FIG. 5A;
FIG. 7 is a flowchart showing the first half of the procedure of a processor 1 written in a computer program 21 of FIG. 1;
FIG. 8 is a flowchart showing the second half of the procedure of the processor 1 to be executed after the procedure of FIG. 7;
FIG. 9A is a schematic diagram showing a 3D mesh *MS* represented by mesh data *Dms* to be transferred in step S31 of FIG. 7;
FIG. 9B is a schematic diagram showing an image representing intermediate image data *Dim1* to be generated in step S37 of FIG. 7;
FIG. 10A is a schematic diagram showing an image representing a 3D mesh *MS'* to be rendered in step S40 of FIG. 8;
FIG. 10B is a schematic diagram showing an image represented by intermediate data *Dim3* to be generated in step S41 of FIG. 8;
FIG. 11A is a schematic diagram showing the process in step S46 of FIG. 8;
FIG. 11B is a schematic diagram showing an image represented by intermediate image data *Dim4* to be generated in step S47 of FIG. 8;
FIG. 12 is a block diagram showing the structure of a rendering device *Urend2* according to a second embodiment of the present invention;
FIG. 13 is a diagram showing the temporary storage areas 31 to 34 which are reserved in the working area 3 of FIG. 12;
FIG. 14A is a diagram showing a mesh database *DBmesh*, an object database *DBobj*, and a two-dimensional image database *DB2dpi* which are stored in the storage device *Ustor* of FIG. 12;
FIG. 14B is a schematic diagram showing the data structure of the two-dimensional image database *DB2dpi* of FIG. 14A;
FIG. 14C is a schematic diagram showing the detailed data structure of each of two-dimensional image data *D2dpi1* to *D2dpim* of FIG. 14B;
FIG. 15 is a flowchart showing the first half of the procedure of the processor 1 written in a computer program 22 of FIG. 12;
FIG. 16 is a flowchart showing the detailed procedure of step S52 of FIG. 15; and
FIG. 17 is a schematic diagram showing an image represented by merged image data *Dbrd* to be generated in step S52 of FIG. 15.

## DESCRIPTION OF THE PREFERRED EMBODIMENTS

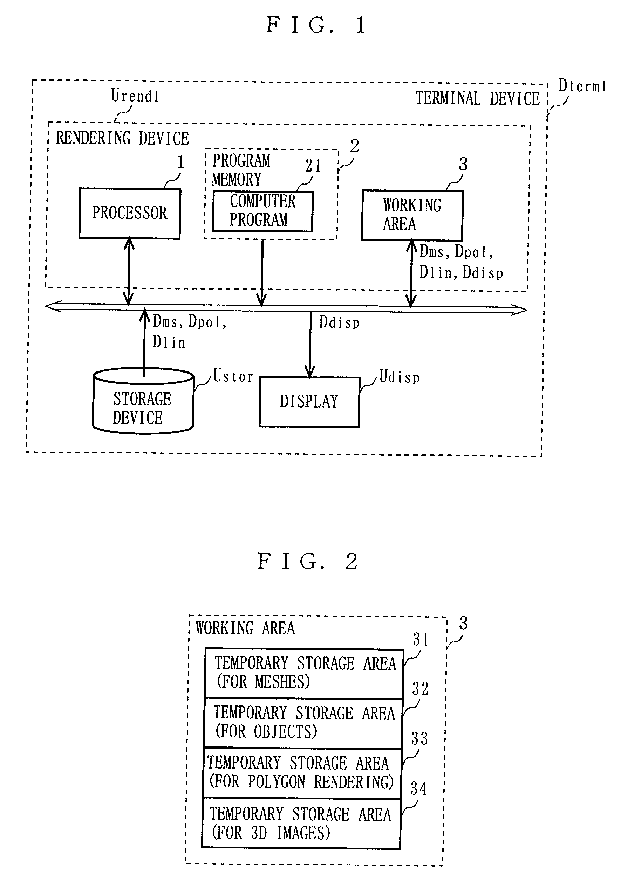

FIG. 1 is a block diagram showing the structure of a terminal device *Dterm1* into which a rendering device *Urend1* according to a first embodiment of the present invention is incorporated. The terminal device *Dtem1* of FIG. 1 is typically a device exemplified by navigation devices of a vehicle-mounting type and game machines for generating and displaying display image data *Ddisp* which represents three-dimensional (3D) images (typically 3D maps) showing polygons having lines drawn thereon. Here, the terminal device *Dterm1* includes the rendering device *Urend1*, a storage device *Ustor* and a display *Udisp*. The rendering device *Urend1* is connected to the storage device *Ustor* and the display *Udisp* for data communications therewith, and includes a processor 1, a program memory 2, and a working area 3.

The processor 1 is typically composed of a CPU (Central Processing Unit) or an MPU (Micro Processing Unit).

The program memory 2 is typically composed of ROM (Read Only Memory), and stores a computer program 21 for a rendering process.

The working area 3 is typically composed of RAM (Random Access memory), and as shown in FIG. 2, has a temporary storage area 31 for meshes, a temporary storage area 32 for objects, a temporary storage area 33 for polygon rendering, and a temporary storage area 34 for 3D images.

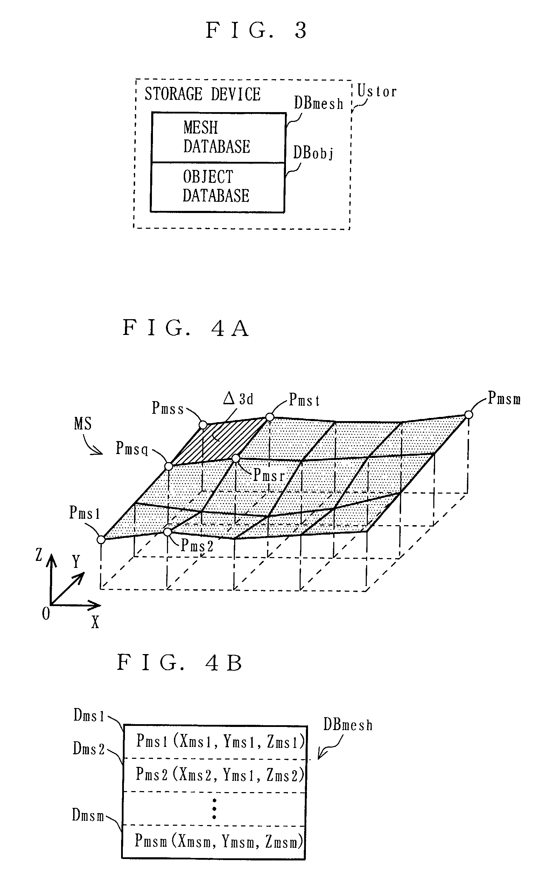

The storage device *Ustor* is typically composed of a device, exemplified by hard disk drives, compact disk drives, or DVD disk drives, by which at least internally stored data can be read out. The storage device *Ustor* stores a mesh database *DBmesh* and an object database *DBobj* as shown in FIG. 3.

The mesh database *DBmesh* of FIG. 3 is constructed as below. Referring to FIG. 4A, a topographic map which graphically represents the surface features of a predetermined range is segmented latitudinally (in the *X*-axis direction) and longitudinally (in the $Y$-axis direction) each at predetermined intervals. That is, the topographic map is first divided by a two-dimensional (2D) mesh. In the 2D mesh, points of intersection are each specified by the combination of a latitude coordinate value $Xms$ and a longitude coordinate value $Yms.$ The intersection points of the 2D mesh are each additionally assigned with a height value $Zms$ for specifying the topographic features in three dimensions. Formed thereby is a 3D mesh $MS$ including a plurality of intersection points $Pms$ each specified by a set of coordinates ($Xms, Yms, Zms$) in a 3D space ($XYZ$ orthogonal coordinate system). In the present embodiment, for convenience, the total number of such intersection points $Pms$ is assumed to be $m$ (where $m$ is a natural number), i.e., the intersection points of the 3D mesh $MS$ are $Pms1, Pms2, ..., Pmsm$. As shown in FIG. 4B, the mesh database $DBmesh$ includes mesh data $Dms1$ to $Dmsm$, each of which is specified by a set of 3D coordinates of the intersection points $Pms1$ to $Pmsm$. In the below, as to the 3D mesh $MS$ of FIG. 4A, segment regions each enclosed by line segments connecting four of the intersection points $Pms,$ e.g., intersection points $Pmsq, Pmsr, Pmss$, and $Pmst,$ are referred to as 3D small blocks $\triangle3d$.

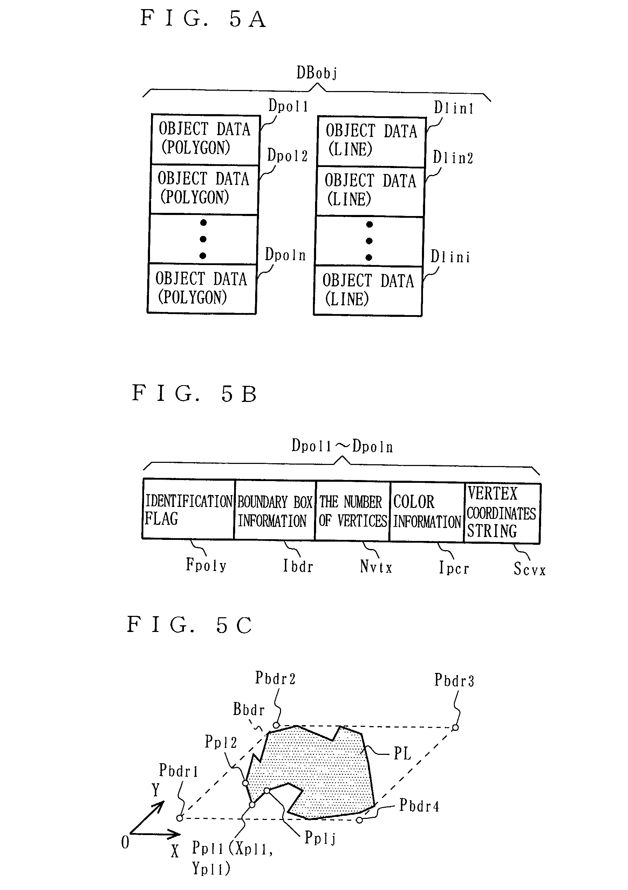

The object database $DBobj$ of FIG. 3 includes, as shown in FIG. 5A, object data $Dpol1$ to $Dpoln$, and object data $Dlin1$ to $Dlini.$ The object data $Dpol1$ to $Dpoln$ each include, as shown in FIG. 5B, an identification flag $Fpoly$, boundary box information $Ibdr,$ the number of vertices $Nvtx,$ color information $Ipcr,$ and vertex coordinates string $Scvx.$ Each information in the object data $Dpol1$ to $Dpoln$ defines various polygons $PL$ by shape on an $XY$ plane.

Here, prior to describing the object data $Dpol1$ to $Dpoln$, for convenience, an exemplary polygon $PL$ will be described by referring to FIG. 5C. In FIG. 5C, the polygon $PL$ is on an $XY$ plane, the $X$ axis of which is latitudinally directed, and the $Y$ axis of which is longitudinally directed. The polygon $PL$ is formed by connecting $j$ (where $j$ is a natural number of three or more) pieces of vertices $Ppl1$ to $Pplj$ in order (shown in FIG. 5C are vertices $Ppl1, Ppl2$, and $Pplj$ only). The vertices $Ppl1$ to $Pplj$ are each specified by the combination of a latitude coordinate value $Xpl$ and a longitudinal coordinate value $Ypl$ on the $XY$ plane. As an example, the vertex $Ppl1$ of FIG. 5C is specified by a set of coordinates ($Xpl1, Ypl1$). Although not shown, other vertices $Ppl2$ to $Pplj$ are specified by, respectively, sets of coordinates ($Xpl2, Ypl2$) to ($Xplj, Yplj$). Such a polygon $PL$ typically represents a map object such as a block or a building.

Refer back to FIG. 5B. The identification flag $Fpoly$ indicates that the object data $Dpol$ including the flag represents the polygon $PL$. In this embodiment, for convenience, the identification flag $Fpoly$ is assumed to be 0. The boundary box information $Ibdr$ is not essential to the present invention, and thus will be mentioned briefly later. The number of vertices $Nvtx$ denotes the number of vertices $j$ of the polygon $PL$. The color information $Ipcr$ specifies what color the polygon PL is to be painted. The vertex coordinates string $Scvx$ is composed of the sets of vertex coordinates ($Xpl1, Ypl1$) to ($Xplj, Yplj$) of the polygon $PL$. It should be noted here that the vertex coordinates string $Scvx$ typically includes those vertex coordinates ($Xpl1, Ypl1$) to ($Xplj, Yplj$) in such an order that the polygon $PL$ can be drawn in a stroke.

The boundary box information $Ibdr$ specifies the shape of a boundary box $Bbdr$ of FIG. 5C (a region indicated by the dotted lines). Here, the boundary box $Bbdr$ is typically a rectangle housing the polygon $PL$ therein while abutting to the polygon $PL$ at all sides thereof, and is defined by four sets of $XY$ vertex coordinates of the vertices $Pbdr1$ to $Pbdr4$ on the $XY$ plane.

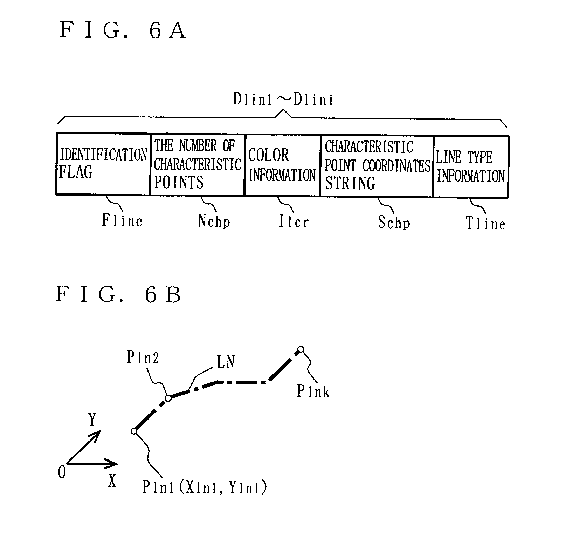

Refer back to FIG. 5A. The object data $Dlin1$ to $Dlini$ each include, as shown in FIG. 6A, an identification flag $Fline$, the number of characteristic points $Nchp$, color information $Ilcr$, a characteristic point coordinates string $Schp$, and line information $Tline$. Each information in the object data $Dpol1$ to $Dpoln$ defines various linear objects (hereinafter, simply referred to as lines) $LN$ by shape on the $XY$ space.

Prior to describing the object data $Dlin1$ to $Dlini$, for convenience, an exemplary line $LN$ will be described by referring to FIG. 6B. In FIG. 6B, the line $LN$ is on the same $XY$ plane as in the above, and formed by connecting $k$ (where $k$ is a natural number) pieces of characteristic points $Pln1$ to $Pink$ in order (shown in FIG. 6B are characteristic points $Pln1, Pln2$, and $Plnj$ only). The characteristic points $Pln1$ to $Plnk$ are points needed to define the line $LN$ by shape on the $XY$ plane, and in this embodiment, include at least both endpoints of the line $LN$ and any point thereon at where the line $LN$ bends. The characteristic points $Pln1$ to $Plnk$ are each specified by the combination of a latitude coordinate value $Xln$ and a longitudinal coordinate value $Yln$ on the $XY$ plane. As an example, the characteristic point $Pln1$ of FIG. 6B is specified by a set of $XY$ coordinates ($Xln1, Yln1$). Although not shown, other characteristic points $Pln2$ to $Plnk$ are specified by, respectively, sets of coordinates ($Xln2, Yln2$) to ($Xlnk, Ylnk$).

The identification flag $Fline$ indicates that the object data $Dlin$ including the flag represents the line $LN.$ In this embodiment, for convenience, the identification flag $Fline$ is assumed to be 1 to be distinguished from the identification flag $Fpoly$ being 0. The number of characteristic points $Nchp$ denotes the total number of the characteristic points $Pln1$ to $Plnk$ included in the line $LN.$ The color information $Ilcr$ denotes in what color the line $LN$ will be painted. The characteristic point coordinates string $Schp$ is composed of sets of $XY$ coordinates ($Xln1, Yln1$) to ($Xlnk, Ylnk$) of the characteristic points of the line $LN.$ Note that the characteristic point coordinates string $Schp$ typically includes those $XY$ coordinates ($Xln1, Yln1$) to ($Xlnk, Ylnk$) in such an order that the line $LN$ can be drawn in a stroke. The line information $Tline$ at least indicates the line type (e.g., solid line, dotted line) and thickness of the line $LN.$

In FIG. 1, the display $Udisp$ goes through a display process in accordance with display image data $Ddisp$

which is to be generated on the working area 3 with a rendering process executed. The display *Udisp* then displays the resultant 3D image (3D map in this embodiment) on its screen. Here, the rendering process will be left for later description.

In the terminal device *Dterm1* with such a structure, the processor 1 follows the computer program 21 to generate display image data *Ddisp* on the working area 3 by using the mesh data *Dms,* and the object data *Dpol* and *Dlin* in the storage device *Ustor.* In the below, the operation of the terminal device *Dterm1* is described in more detail while focusing on the operation of the rendering device *Urend1.*

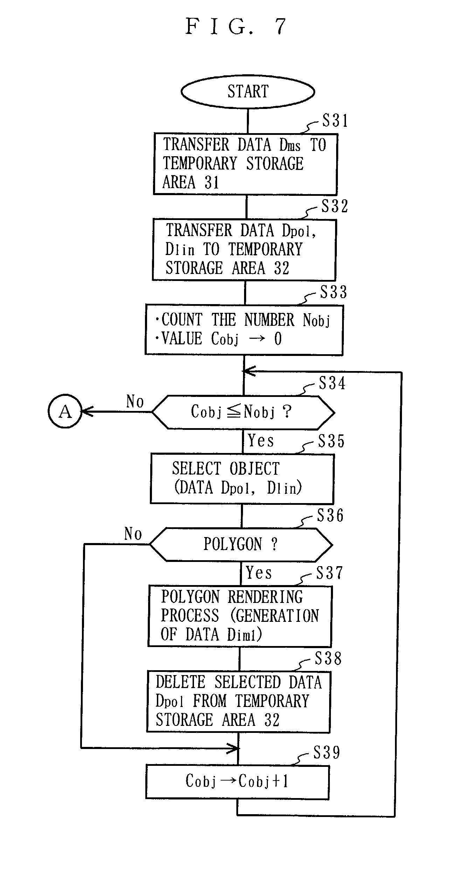

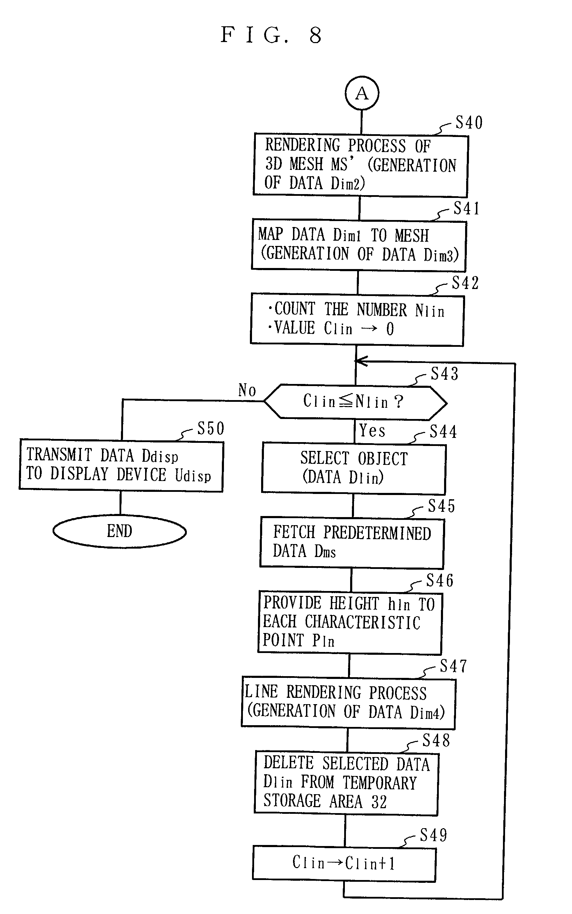

FIGS. 7 and 8 are main flowcharts showing the procedure of the processor 1 written in the computer program 21. In FIG. 7, immediately after starting the computer program 21 for execution, the processor 1 transfers the mesh data *Dms* of a predetermined region β1 from the storage device *Ustor* to the temporary storage area 31 (step S31).

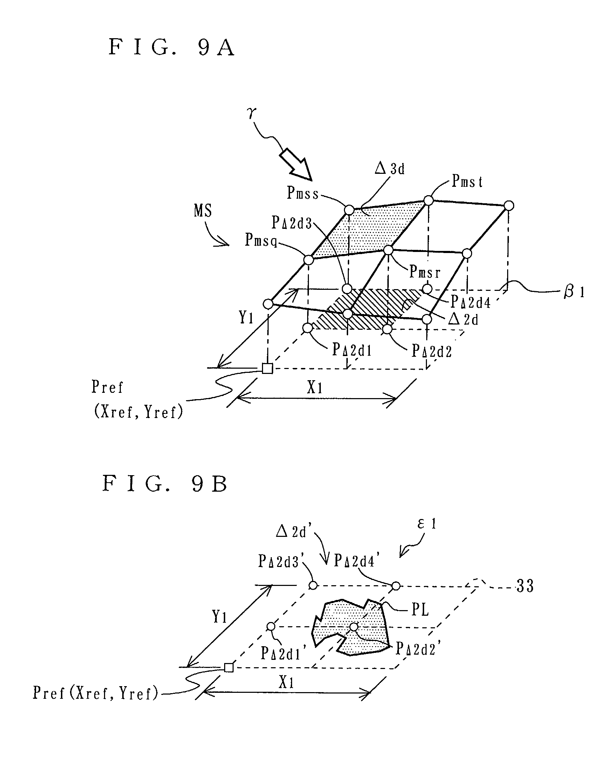

The region β1 is exemplarily a region enclosed by the dotted edges in FIG. 9A. In detail, a reference point *Pref(Xref, Yref)* is predetermined on the *XY* plane. The reference point *Pref* is a point designated by the user of the terminal device *Dterm1* or a point derived through calculation made by the processor 1. From the reference point *Pref* (*Xref, Yref*), the length of the region β1 in the latitude direction (X-axis direction) is previously set to *X1*, and in the longitude direction (Y-axis direction) to *Y1*. The mesh data *Dms* of the region β1 includes *XYZ* coordinates of a plurality of intersection points, the latitude coordinate value *Xms* of which is in the range from *Xref* to *Xref + X1*, and the longitude coordinate value *Yms* from *Yref* to *Yref + Y1*. In the present embodiment, for convenience, such a region β1 is supposed to be also a range of the 3D map displayed on the display *Udisp.*

For the sake of simplification, the mesh data *Dms* of the region β1 is presumed to be transferred in step S31. Alternatively, with the aim of displaying the 3D map at higher speed, in step S31, the mesh data *Dms* of the region bigger than the region β1 may be transferred to the temporary storage area 31 which is composed of RAM shorter in access time than the storage device *Ustor.*

The processor 1 then transfers the object data *Dpol* and *Dlin* of the region β1 from the storage device *Ustor* to the temporary storage area 32 (step S32). This is merely for the sake of simplification, and transferred here may be the object data *Dpol* and *Dlin* of the region bigger than the region β1.

After step S32, the processor 1 counts and retains the total number *Nobj* of the object data *Dpol* and *Dlin* in the temporary storage area 32, and then sets a value *Cobj* of a counter (not shown) to an initial value 0 (step S33). Here, in step S35 which will be described later, one object data is selected out of those *Dpol* and *Dlin* in the temporary storage area 32. The counter value *Cobj* indicates how many of the object data *Dpol* and *Dlin* have been selected in step S35.

It should be noted here that the order of steps S31, S32, and S33 is not restrictive as long as step S33 follows step S32.

The processor 1 then determines whether the counter value *Cobj* is equal to the number *Nobj* or smaller (step S34). If not *Cobj <= Nobj*, the processor 1 regards that all of the object data *Dpol* and *Dlin* in the temporary storage area 32 have been selected in step S35, and thus the procedure goes to step S40 which will be described later (see FIG. 8). If *Cobj <= Nobj*, the processor 1 regards that any of the object data *Dpol* and *Dlin* is yet left in the temporary storage area 32, and thus the procedure goes to step S35.

The processor 1 selects one object data out of those *Dpol* and *Dlin* in the temporary storage area 32 (step S35), and then determines what the object data represents, i.e., the polygon *PL* or the line *LN* (step S36). More specifically, to make such a determination, the processor 1 refers to the identification flag *Fpoly* or *Flin* (0 or 1) in the selected object data *Dpol* or *Dlin.* In this embodiment, when the value is 0, it means that the selected object data is *Dpol,* and when the value is 1, selected is the object data *Dlin.*

When the object data *Dlin* is selected in step S35, the procedure goes to step S39, which will be described later. On the other hand, when selected in step S35 is the object data *Dpol,* the processor 1 performs a polygon rendering process (step S37). At this time, represented in the temporary storage area 33 is the *XY* plane specified by the region β1, and the processor 1 generates intermediate image data *Dim1* on the temporary storage area 33 (step S37). As shown in FIG. 9B, the intermediate image data *Dim1* is a bit image ε1 which represents the polygon *PL.* The processor 1 then adds, if necessary, the values of the reference point *Pref(Xref, Yref)*, the length *X1,* and the length *Y1* to the intermediate image data *Diml1.*

Next, the processor 1 deletes the object data *Dpol* selected in step S35 from the temporary storage area 32 (step S38), and then increments the counter value *Cobj* by 1 (step S39). The procedure then returns to step S34.

The processor 1 repeats the processes of steps S34 to S39 so that only the object data *Dpol* in the temporary storage area 32 is subjected to the rendering process. After completion of the rendering process, the intermediate image data *Diml* being the bit image ε1 representing the polygon *PL* is generated on the temporary storage area 33 (step S37). In this manner, at the time when *Cobj <= Nobj* is determined as not being satisfied in step S34, generated on the temporary storage area 33 is the intermediate image data *Dim1* being the bit image ε1 representing every polygon *PL* for the region β1. Moreover, at this point in time, the temporary storage area 32 has no object data *Dpol* and therein, only the object data *Dlin* is left.

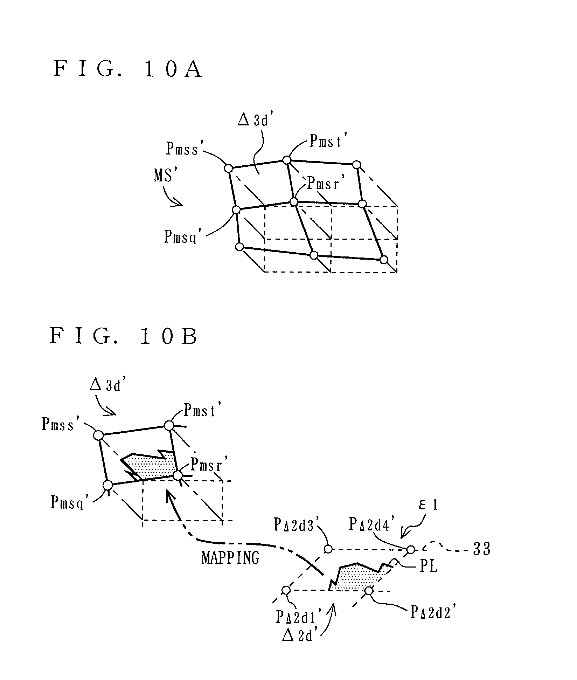

If *Cobj <= Nobj* is determined as not being satisfied in step S34, the processor 1 performs a mesh rendering process with the mesh data *Dms* transferred to the temporary storage area 31 in step S31 (FIG. 8; step S40). At this time, the processor 1 applies a perspective transformation process to the mesh data *Dms,* and thereby, intermediate image data *Dim2* is generated on the temporary storage area 34 as shown in FIG. 10A. The intermediate image data *Dim2* is the one representing a 3D mesh *MS'*, which is the one viewing the 3D mesh *MS* from a predetermined viewpoint (or a view reference point) γ (see FIG. 9A). The 3D mesh *MS'* is structured by a plurality of 3D small blocks Δ3d', which are the ones viewing the 3D small blocks Δ3d of the 3D mesh *MS* from the viewpoint γ. FIG. 10A shows an example of the 3D small blocks Δ3d' formed by four vertices *Pmsq'* to *Pmst',* and some other 3D small blocks Δ3d' in the vicinity thereof. That is, FIG. 10A shows the result of perspective transformation applied to the 3D small block Δ3d formed by four vertices *Pmsg* to *Pmst,* and some other 3D small blocks Δ3d in the vicinity thereof.

The processor 1 then performs a mapping process typified by texture mapping with the intermediate image data *Dim1* in the temporary storage area 33 and the intermediate image data *Dim2* in the temporary storage area 34 (step S41). In detail, in step S41, the processor 1 calculates 2D small blocks Δ2d from the mesh data *Dms* in the temporary storage area 31, more specifically, from the set of vertex coordinates (*Xms, Yms, Zms*) of the respective 3D small blocks Δ3d of the 3D mesh *MS.* As an example, assuming here that the 3D small block Δ3d indicated by dots in FIG. 9A is formed by four vertices of *Pmsq*(*Xmsq, Ymsq, Zmsg*), *Pmsr*(*Xmsr, Ymsq, Zmsr*), *Pmss*(*Xmsq, Ymss, Zmss*), and *Pmst*(*Xmsr, Ymss, Zmst*). Under this assumption, the processor 1 replaces the Z component values (the height values) of the vertices *Pmsq* to *Pmst* with 0, and thereby, derives a 2D small block Δ2d (a part indicated by slashes) which is formed by four vertices PΔ2d1 to PΔ2d4 and by projecting the 3D small block Δ3d onto the *XY* plane. Here, the vertex PΔ2d1 has the X̲Y̲ coordinates of (*Xmsq*, *Ymsq*), the vertex PΔ2d2 of (*Xmsr, Ymsq*), the vertex PΔ2d3 of (*Xmsq, Ymss),* and the vertex PΔ2d4 of (*Xmsr, Ymss).*

Then. the processor 1 derives a predetermined region Δ2d' from those *XY* coordinates of the vertices PΔ2d1 to PΔ2d4. Here, the predetermined region Δ2d' is a region corresponding to the 2D small block Δ2d in the bit image ε1 (see FIG. 9B). Assuming here that four vertices PΔ2d1', PΔ2d2', PΔ2d3', and PΔ2d4' specifying the predetermined region Δ2d' have the *XY* coordinates, respectively, (*Xmsq", Ymsq"*), (*Xmsr", Ymsq"*), (*Xmsq", Ymss"*), and (*Xmsr", Ymss"*). Under this assumption, satisfied are *Xmsq" = Xmsq - Xref, Ymsq" = Ymsq - Yref, Xmsr" = Xmsr - Xref,* and *Ymss" = Ymss - Yref.*

The processor 1 then maps, in the intermediate image data *Dim1,* any part of the bit image ε1 corresponding to thus derived region Δ2d' onto the 3D small block Δ3d of the 3D mesh *MS'* derived in step S40. For example, the 3D mesh *MS'* of FIG. 10A includes the 3D small block Δ3d'. As described in the above, the 3D small block Δ3d' is the one derived by subjecting the 3D small block Δ3d formed by four vertices *Pmsq* to *Pmst* to perspective transformation. The vertices Pmsq' to Pmst' of the 3D small block Δ3d' correspond to the vertices PΔ2d1' to PΔ2d4' of the predetermined region Δ2d'. Thus, as shown in FIG. 10B, the processor 1 maps any part of the bit image ε1 corresponding to the region Δ2d' onto the 3D small block Δ3d in such a manner that the vertices PΔ2d1' to PΔ2d4' correspond to the vertices Pmsq' to Pmst'.

The processor 1 applies such a mapping process to every 3D small block Δ3d' of the 3D mesh *MS'*. As a result, intermediate image data *Dim3* representing a 3D image of the polygon *PL* mapped onto the 3D mesh *MS'* is generated on the temporary storage area 34. In the below, the polygon *PL* mapped onto the 3D mesh *MS'* is referred to as a polygon *PL'.*

The processor 1 then counts and retains the total number *Nlin* of the object data *Dlin* in the temporary storage area 32, and sets a value *Clin* of a counter (not shown) to an initial value 0 (step S42). Here, the counter value *Clin* indicates how many of the object data *Dlin* have been selected in step S44, which will be described later.

Then, the processor 1 determined whether the counter value *Clin* is equal to the number *Nlin* or smaller (step S43). If not *Clin <= Nlin*, the processor 1 regards that all of the object data *Dlin* in the temporary storage area 32 have been selected in step S44 so that the procedure goes to step S50, which will be described later. On the other hand, if *Clin <= Nlin*, the processor 1 regards that any of the object data *Dlin* in the temporary storage area 32 is not yet selected so that the procedure goes to step S44.

The processor 1 selects one of the object data *Dlin* in the temporary storage area 32 (step S44), and then fetches the mesh data *Dms* satisfying a predetermined condition from the temporary storage area 31 (step S45). In step S45, from the characteristic point coordinates string *Schp* of the object data *Dlin* selected in step S44, the processor 1 derives minimum and maximum coordinate values *Xmin* and *Xmax* in the latitude direction (*X*-axis direction), and minimum and maximum coordinate values *Ymin* and *Ymax* in the longitude direction (*Y*-axis direction). The processor 1 then fetches the mesh data *Dms* of a rectangle region defined by sets of coordinates (*Xmin, Ymin*), and (*Xmax, Ymax*) from the temporary storage area 31.

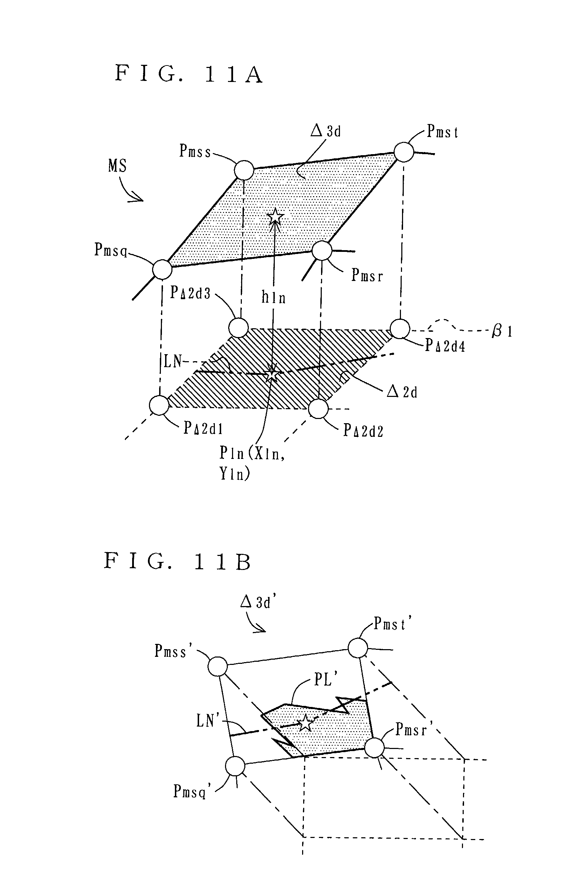

With the mesh data *Dms* received in step S45, the processor 1 to provide each of the characteristic points *Pln* of the object data *Dlin* selected in step S44 with a height value *hln* (step S46). In the below, a specific exemplary method of calculating the height value *hln* is described by referring to FIG. 11A. As shown in FIG. 11A, the object data *Dlin* selected in step S44 includes a characteristic point *Pln* having the 2D coordinates of (*Xln, Yln*). For convenience, the characteristic point *Pln* is assumed to be included in the 2D small block Δ2d shown in FIG. 9A. The 3D small block Δ3d corresponding to the 2D small block Δ2d is formed by four vertices of *Pmsq*(*Xmsq, Ymsq, Zmsq*), *Pmsr*(*Xmsr, Ymsq, Zmsr*), *Pmss*(*Xmsq, Ymss, Zmss*), and *Pmst*(*Xmsr, Ymss, Zmst*).

Under this assumption, the height value *hln* provided to the characteristic point *Pln* is calculated as follows. First, express *h'* and *h''* by the following equations (1) and (2).

$$h' = (Zmsr - Zmsq) \times (X1n - Xmsq)/(Xmsr - Xmsq) + Zmsq \qquad (1)$$

$$h'' = (Xmst - Zmss) \times (X1n - Xmsp)/(Xmsr - Xmsq) + Zmss \qquad (2)$$

The height value *hln* is expressed by the following equation (3) by using those *h'* and *h''* of the equations (1) and (2).

$$hln = (h'' - h') \times (Yln - Ymsq)/ (Ymss - Ymsq) + h' \qquad (3)$$

The processor 1 provides the height value *hln* calculated in the same manner as above also to other characteristic points *Pln.* By going through step S46 as such, the processor 1 derives the 3D coordinates (*Xln1, Yln1, hln1*), (*Xln2, Yln2, hln2*), ..., (*Xlnk, Ylnk, hlnk*) of the object data *Dlin,* that is, the characteristic points *Pln1* to *Plnk* of the line *LN*.

Based on the 3D coordinates *Pln1*(*Xln1, Yln1, hln1*) to *Plnk*(*Xlnk, Ylnk, hlnk*) of the line *LN*, and the color information *Ilcr* and the line type information *Tline* of the object data *Dlin,* the processor 1 applies the rendering process to the line *LN* on the temporary storage area 34 (step S47). To be more specific, on the temporary storage area 34, the processor 1 connects those 3D coordinates *Pln1* to *Plnk* in order by using the color indicated by the color information *Ilcr*, and the thickness and the line type indicated by the line type information *Tline.*

Here, prior to connecting the 3D coordinates *Pln1* to *Plnk* in order, the processor 1 may add a predetermined correction value Δh to the height value *hln* calculated for each of the characteristic points *Pln* in accordance with the equation (3). By going through such a rendering process, the line *LN* embosses on the surface of the 3D mesh *MS'*.

Also, simply connecting the 3D coordinates *Pln1* to *Plnk* as in the above may not successfully draw the line *LN* along the surface of the 3D mesh *MS'*. Thus, it is more preferable for the processor 1 to go through a process to help the line *LN* to go along the surface of the 3D mesh *MS'*. Herein, however, such a process of making the line *LN* along the surface of the line *LN* is not the purpose of the present invention, and thus is not described in detail.

In step S47, the processor 1 applies the perspective transformation process to those 3D coordinates *Pln1* (*xln1, Yln1, hln1*) to *Plnk*(*Xlnk, Ylnk, hlnk*) of the line *LN*, and derived thereby is a line *LN'* which is the one viewing the line *LN* from the same viewpoint γ as above. The processor 1 thus generates, on the temporary storage area 34, intermediate image data *Dim4* representing a 3D image in which the line *LN'* is drawn on the polygon *PL'* mapped onto the 3D small block Δ3d' (see FIG. 11B). In the present embodiment, the intermediate image data *Dim4* represents the 3D map of the region β1 including the polygon(s) PL' (blocks, buildings), and the line(s) *LN'* (roads, railroads) selected in step S44 rendered on the 3D mesh *MS'* (ground surface).

The processor 1 then deletes the object data *Dlin* selected in step S44 from the temporary storage area 32 (step S48), and then increments the counter value *Clin* by 1 (step S49). The procedure then returns to step S43.

The processor 1 repeats the processes of steps S43 to S49 so that only the object data *Dlin* in the temporary storage area 32 is subjected to the rendering process. As a result of completing the rendering process, display image data *Ddisp* is generated in the temporary storage area 34 (step S47). Accordingly, at the point in time when *Clin* <= *Nlin* is determined as not being satisfied in step S43, the display image data *Ddisp* which represents the complete 3D map having every line *LN* rendered thereon is generated on the temporary storage area 34. In this embodiment, the display image data *Ddisp* represents the 3D map of the region β1 showing the polygon(s) PL' (blocks, buildings), and line(s) *LN'* (roads, railroads) rendered on the 3D mesh *MS'* (ground surface). At this point, every object data *Dlin* has been deleted from the temporary storage area 32.

If *Clin* <= *Nlin* is determined as not being satisfied in step S43, the processor 1 transfers the display image data *Ddisp* currently in the temporary storage area 34 to the display *Udisp* (step S50). The display device *Udisp* performs a display process according to thus received display image data *Ddisp,* and then displays the resultant 3D image (3D map in this embodiment) on its screen.

As such, the rendering device *Urend1* does not draw a 3D polygon *PL* directly from the object data *Dpol*, but prior to rendering the 3D polygon *PL*, first generates a 2D bit image on the temporary storage area 33 for mapping onto the 3D mesh *MS'*. To draw a line *LN,* the rendering device *Urend1* first provides a height value *hln* to each of the characteristic points *Pln* of the object data *Dlin*. Then, according to the line type information *Tline* and the color information *Ilcr,* the rendering device *Urend1* draws the line *LN* directly onto the 3D mesh *MS'* on which the polygons *PL* has been drawn.

The reason why differing the rendering process between the polygon *PL* and the line *LN* is due to the difference therebetween in width. That is, the polygon *PL* is wider than the line *LN*. Thus, mapping the polygon *PL* onto the 3D mesh *MS'* merely results in relatively inconspicuous deformation occurring to the resultant polygon *PL'*. However, mapping the line *LN* onto the 3D mesh *MS'* causes the resultant line *LN'* to be noticeably deformed, some part of which may be deformed to a considerable extent than the rest. From this point of view, the rendering device *Urend1* does not map the line *LN* onto the 3D mesh *MS'*, but draws the line *LN* by connecting in order the characteristic points *Pln*1 to *Plnk* represented by the 3D coordinates according to the thickness indicated by the line type information *Tline*. In this manner, the line *LN* is successfully prevented from being deformed, and the resultant display image data *Ddisp* generated by the terminal device *Dterm1* can represent the 3D map in which the line *LN* looks more realistic.

Moreover, by differing the rendering process between the polygon *PL* and the line *LN,* other technical effects are to be produced. For example, the polygon *PL* as a map component (block or building) is often complex in shape with the large number *Nvtx* of vertices. In such a case, if the polygon *PL* is directly rendered three dimensionally based on the object data *Dpol* without applying a mapping process thereto, coordinate transformation has to be carried out for a number of times, putting the load on the processor 1 for processing as such. From such a point of view, in the rendering device *Urend1*, the processor 1 generates 2D bit image ε 1 from the object data *Dpol,* and then maps the bit image onto the 3D mesh *MS'*. In this manner, the processor 1 is reduced in processing load.

In the above embodiment, a 3D small block Δ3d of the 3D mesh *MS* is presumably specified by four intersection points. The number of intersection points is not restrictive, and three or more intersection points may specify the 3D small block Δ3d.

Also in the above embodiment, the processor 1 is presumed to render the polygons *PL* representing blocks, and the lines *LN* representing roads, for example. Not only those, the 3D map carries names of landmarks, area names, and the like. Accordingly, the terminal device *Dterm1* may store character data representing letters typified thereby in the storage device *Ustor,* and the resultant display image data *Ddisp* may represent the 3D map of the region β1 including not only the polygons *PL* (blocks, buildings) and the lines *LN* (roads, railroads) rendered on the 3D mesh *MS'* but also the letters merged thereon. As a result, the 3D map represented by such display image data *Ddisp* will be easier to understand for the user. Here, for better viewability of the 3D map, it is preferable for the processor 1 not to apply the coordinate transformation process to the character data, and simply merge the letters onto each appropriate position on the 3D map.

Further, the processor 1 is presumed to transfer the generated display image data *Ddisp* to the display *Udisp* in the above. The processor 1 may also save the display image data *Ddisp* not in the temporary storage areas 31 to 34 but in any other temporary storage area reserved on the working area 3. By doing so, even if the display image data *Ddisp* is in need later for some reasons, the processor 1 has no need to repeat the procedure of FIGS. 7 and 8 again, but only accessing the storage area on the working area 3 will derive the display image data *Ddisp.*

In the first embodiment, for the sake of clarity, the terminal device *Dterm1* is presumed to display the 3D maps. However, not only to the 3D maps, the terminal device *Dterm1* is easily applicable to the rendering process applied to 3D objects typified by buildings, people, and animals, for example. Specifically, the mesh data *Dms* specifies the topographic features of a 3D object, the object data *Dpol* two dimensionally defines, by shape, a polygon to be mapped onto the surface of the 3D object, and the object data *Dlin* two dimensionally defines, by shape, a line to be rendered on the 3D object. On the basis of the mesh data *Dms,* and the object data *Dpol* and *Dlin* as such, the rendering device *Urend1* generates the display image data *Ddisp* in accordance with the procedure of FIGS. 7 and 8.

In the first embodiment, the processor 1 is presumed to transfer the mesh data *Dms,* and the object data *Dpol* and *Dlin* from the storage device *Ustor* in the terminal device *Dterm1* to the working area 3. Here, the mesh data *Dms,* and the object data *Dpol* and *Dlin* may be previously stored in a server located far from the rendering device *Urend1* through a network typified by the Internet or LAN (Local Area Network). If this is the case, after receiving the mesh data *Dms,* and the object data *Dpol* and *Dlin* from the server through the network, the rendering device *Urend1* generates the display image data *Ddisp* in accordance with the procedure of FIGS. 7 and 8. As is evident from the above, the rendering device *Urend1* does not necessarily include the storage device *Ustor.*

Further, in the first embodiment, the processor 1 is presumed to transfer the display image data *Ddisp* to the display *Udisp* in the terminal device *Dterm1*. This is not restrictive, and the display image data *Ddisp* may be transferred from the rendering device *Urend1* to a display located far therefrom through the network as above. That is, the rendering device *Urend1* does not necessarily include the display *Udisp.*

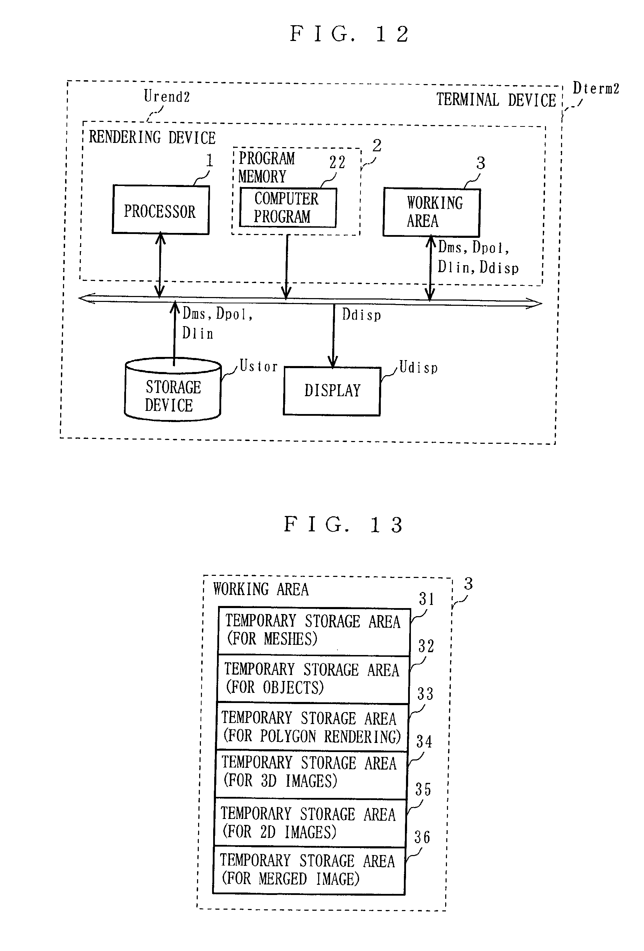

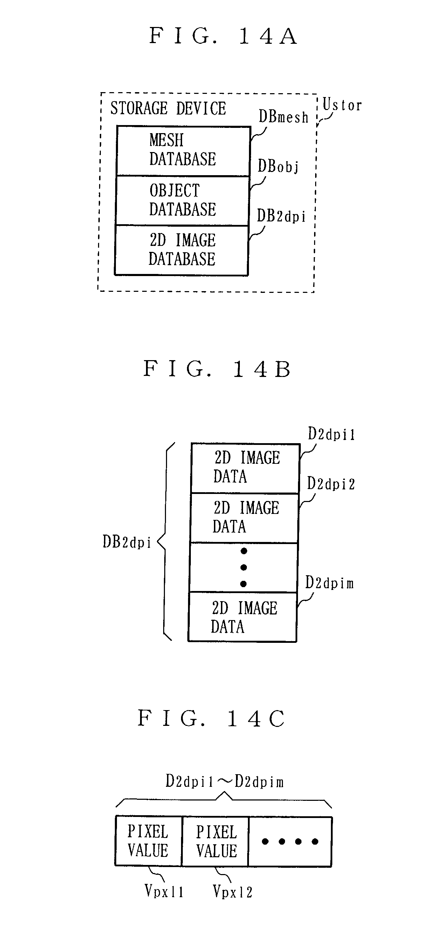

FIG. 12 is a block diagram showing the structure of a terminal device *Dterm2* into which a rendering device *Urend2* according to a second embodiment of the present invention is incorporated. The terminal device *Dterm2* of FIG. 12 is different from the terminal device *Dterm1* of FIG. 1 in the following three respects: the working area 3 including a temporary storage area 35 for 2D images and a temporary storage area 36 for merged images as shown in FIG. 13; the storage device *Ustor* further storing a 2D image database *DB2dpi* in addition to the mesh database *DBmesh* and the object database *DBobj* as shown in FIG. 14; and the program memory 2 storing a computer program 22 as an alternative to the computer program 21. There are no other structural differences therebetween, and thus in the terminal device *Dterm2,* any identical constituent to the terminal device *Dterm1* is under the same reference numeral, and not described again.

Referring to FIG. 14A, the 2D image database *DB2dpi* is stored in the storage device *Ustor,* and constructed as below. First, prepared is, at least, an aerial photo showing, from the above, the ground surface of an area covered by the 3D mesh *MS* (see the first embodiment). For convenience of the rendering process, this aerial photo is segmented latitudinally (in the *X*-axis direction) and longitudinally (in the *Y*-axis direction) each at predetermined intervals, i.e., the aerial photo is divided by the 2D mesh, which is described in the first embodiment. As shown in FIG. 14B, the 2D image database *DB2dpi* includes *m* pieces of 2D image data *D2dpi* each represents an aerial photo corresponding to each segmented region. Here, each of the 2D image data *D2pdi* is a bit image. As shown in FIG. 14C, in the 2D image data *D2pdi*, pixel values *Vpx11, Vpx12, ...,* for representing the aerial photos are arranged in order. In this respect, the 2D image data *D2dpi* has a conspicuous difference from the object data *Dpol* and *Dlin*.

In the terminal device *Dterm* with such a structure, the processor 1 of the rendering device *Urend2* executes the rendering process by following the computer program 22, and then generates the display image data *Ddisp* on the working area 3 based on the mesh data *Dms*, the object data *Dpol* and *Dlin*, and the 2D image data *D2dpi* in the storage device *Ustor.* In the below, the operation of the terminal device *Dterm2* is described in more detail while focusing on the operation of the rendering device *Urend2*.

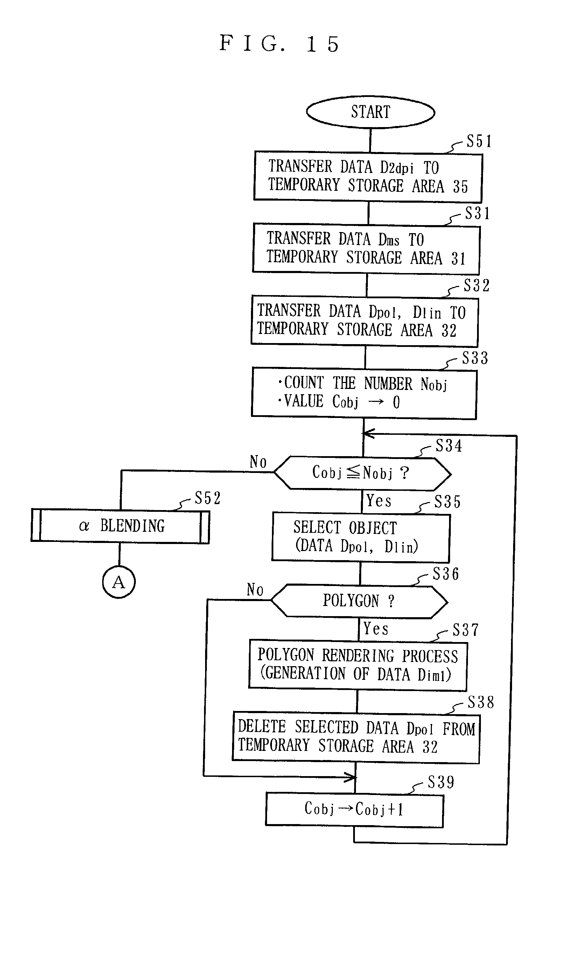

FIG. 15 is a main flowchart showing the first half of the rendering process procedure of the processor 1 written in the computer program 22. Compared with the procedure of FIG. 7, the procedure of FIG. 15 further includes steps S51 and S52. This is the only difference therebetween, and in FIG. 15, any step corresponding to that in FIG. 7 is under the same step number, and not described again. The second half of the procedure of the processor 1 is the same as that of FIG. 8, and thus not shown.

In FIG. 15, immediately after starting the computer program 22 for execution, the processor 1 transfers the 2D image data *D2dpi* of the predetermined region β1 (see the first embodiment) from the storage device *Ustor* to the temporary storage area 35 (step S51). For convenience, in this embodiment, step S51 is carried out immediately after the computer program 22 is started. Here, since the 2D image data *D2dpi* in the temporary storage area 35 is used in step S52, which will be described later, step S51 is not limited when to be carried out as long as before step S52.

After step S51, the processor 1 carries out the processes of steps S31 to S39. Here, as described in the first embodiment, at the time when *Cobj <= Nobj* is determined as not being satisfied in step S34, the intermediate image data *Dim1* is generated on the temporary storage area 33. When *Cobj <= Nobj* is determined as not being satisfied, on the basis of the intermediate image data *Dim1* and the 2D image data *D2dpi* transferred to the temporary storage area 35 in step S51, the processor 1 performs α-blending (step S52). The processor 1 then generates, on the temporary storage area 36, merged image data *Dbrd* derived by merging the 2D image of the polygon *PL* represented by the intermediate image data *Dim1* and the aerial photo represented by the 2D image data *D2dpi*. Here, in the present embodiment, in the intermediate data *Dim1* and the 2D image data *D2dpi*, the number of pixels *Ihei* in the vertical (longitudinal) direction and the number of pixels *Iwid* in the horizontal (latitude) direction are presumably adjusted to be the same.

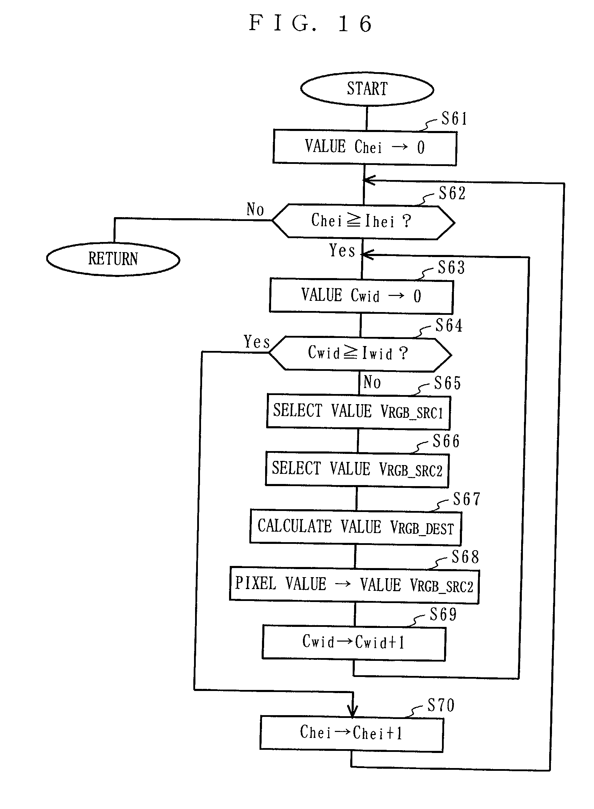

FIG. 16 is a flowchart showing the detailed procedure of step S52. In FIG. 16, the processor 1 sets a value *Chei* of a counter (not shown) to an initial value 0 (step S61). Here, the counter value *Chei* indicates a pixel number assigned in ascending order from the reference point *Pref* in the vertical (longitudinal) direction in the intermediate image data *Dim1* and the 2D image data *D2dpi.*

The processor 1 then determines whether the counter value *Chei* is equal to the number of pixels *Ihei* or more (step S62). If *Chei >= Ihei*, the processor 1 regards that all of the pixels of the intermediate image data *Dim1* and the 2D image data *D2dpi* have been completely processed, and thus ends α-blending (step S52). The procedure then goes to step S40 (see FIG. 8). On the other hand, if not *Chei >= Ihei*, the processor 1 regards that any of the pixels is yet left for the process, and the procedure then goes to step S63.

The processor 1 then sets a value *Cwid* of a counter (not shown) to an initial value 0 (step S63). Here, the counter value *Cwid* indicates a pixel number assigned in ascending order from the reference point *Pref* in the horizontal (latitude) direction in the intermediate image data *Dim1* and the 2D image data *D2dpi.*

The processor 1 then determines whether the counter value *Cwid* is equal to the number of pixels *Iwid* or more (step S64). If *Cwid >= Iwid*, the processor 1 regards that every pixel in one row of the intermediate image data *Dim1* and the 2D image data *D2dpi* has completely processed, and then the procedure goes to step S70. On the other hand, if not *Cwid >= Iwid*, the processor 1 regards that any of the pixels is yet left in the row for the process, and then the procedure goes to step S65.

The processor 1 selects, as a value *VRGB_SRC1*, a pixel value *Vpxi* which is uniquely specified by the current counter values *Chei* and *Cwid* in the 2D image data *D2dpi* (step S65).

The processor 1 also selects, as a value *VRGB_SRC2*, a pixel value which is uniquely specified by the current counter values *Chei* and *Cwid* in the intermediate image data *Dim1* (step S66). Here, step S66 may be carried out before step S65.

The processor 1 then calculates a value *VRGB_DEST* expressed by the following equation (4) (step S67).

$$\text{VRGBG\_DEST} = \text{VRGB\_SRC1} \times \alpha + \text{VRGB\_SRC2} \times (1\text{-}\alpha) \tag{4}$$

Next, in the temporary storage area 36, the processor 1 sets thus calculated value *VRGB_DEST* in step S67 to the pixel value uniquely specified by the current counter values *Chei* and *Cwid* (step S68).

The processor 1 then increments the counter value *Cwid* by 1 (step S69), and the procedure returns to step S63. By repeating such the processes of steps S64 to S69, the processor 1 sequentially calculates the pixel values for the row of the merged image data *Dbrd*, and stores those into the temporary storage area 36. In step S64, at the time point when *Cwid* >= *Iwid* is determined as being satisfied, the temporary storage area 36 carries all of the pixel values for the row of the merged image data *Dbrd.*

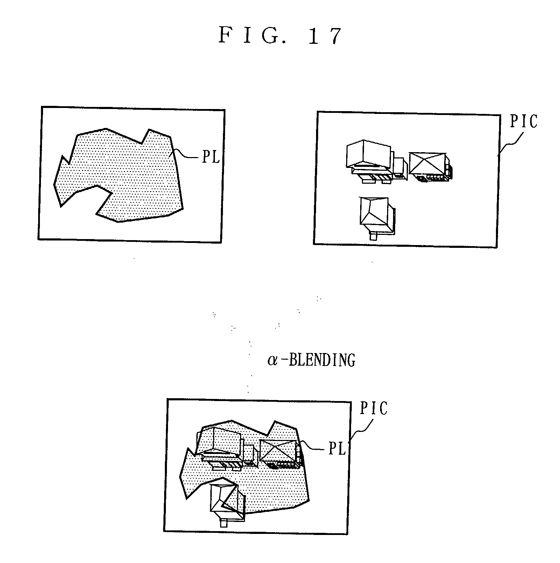

If determined in step S64 that *Cwid* >= *Iwid* is satisfied, the processor 1 increments the counter value *Chei* by 1 (step S70), and the procedure returns to step S62. By repeating such processes of steps S62 to S70, even after completing the calculation of the pixel values for the row and storing those into the temporary storage area 36, the processor 1 keeps calculating the pixel values for the next row. When *Chei* >= *Ihei* is determined as being satisfied in step S62, the temporary storage area 36 carries *Ihei* × *Iwid* pieces of the pixel values of the merged image data *Dbrd.* In such a manner, the processor 1 generates, on the temporary storage area 36, the merged image data *Dbrd* by merging the polygon *PL* and an aerial photo *PIC* as shown in FIG. 17. After α-blending is ended, the procedure goes to step S40 of FIG. 8 and onward.

The process in step S40 and onward is already described in the first embodiment, and no further description is given here. Note that, in step S41 of this embodiment, used as the basis for texture mapping are the merged image data *Dbrd* in the temporary storage area 36 and the intermediate image data *Dim2* in the temporary storage area 34, and generated thereby is the intermediate image *Dim3*.

As such, the terminal device *Dterm2* carries out α-blending based on the intermediate image data *Dim1* and the 2D image data *D2dpi*. Therefore, the 3D map represented by the display image data *Ddisp* includes not only the polygons *PL* and lines *LN* but also the actual aerial photo *PIC*, which are merged thereonto. In this manner, the 3D map displayed on the display *Udisp* can be more expressive.

Here, in the above second embodiment, the 2D image data *D2dpi* representing the aerial photo for the region β1 is transferred to the temporary storage area 35 in step S51. In step S31, the mesh data *Dms* which specifies the 3D mesh *MS* of the same region β1 is transferred to the temporary storage area 31. Further, in step S32, the object data *Dpol* and *Dlin* specifying the polygon(s) *PL* and line(s) *LN* for the same region β1 are transferred to the temporary storage area 32. Alternatively, the 2D image data *D2dpi* representing the aerial photo of a region β2 may be transferred to the temporary storage area 35 in step S51, and the object data *Dpol* and *Dlin* specifying other polygon(s) *PL* and line(s) *LN* for a region β3 different from the region β2 may be transferred to the temporary storage area 32 in step S32. Here, the regions β2 and β3 are both parts of the region β1, and the regions β2 and β3 form the region β1.

In the second embodiment, in the intermediate data *Dim1* and the 2D image data *D2dpi,* the number of pixels *Ihei* in the vertical (longitudinal) direction and the number of pixels *Iwid* in the horizontal (latitude) direction are presumably adjusted to be the same. In the navigation devices of a general type, the 3D map to be displayed can be changed in size responding to the user's request. For such a size change, the processor 1 receives, from an input device which is not shown, the horizontal size *XH* and the vertical size *YV* for specifying the user's requesting display size. The processor 1 performs a scaling process in step S37 of FIG. 15 so that the resultant intermediate image data *Dim1* has the horizontal size of *XH* and the vertical size of *YV*. The processor 1 then adds, to the intermediate image data *Dim1*, the values of the reference point *Pref*(*Xref, Yref*), the lengths X1 and Y1, and the sizes *XH* and *YV*. Prior to performing α-blending in step S52 of FIG. 15, the processor 1 calculates a scaling factor *Rscale* on the basis of the lengths X1 and Y1, and the sizes *XH* and *YV* added to the intermediate image data *Dim1*. Then, using thus calculated scaling factor *Rscale*, the processor 1 applies the scaling process to the 2D image data *D2dpi* in the temporary storage area 35 before carrying out α-blending.

In the second embodiment, the 2D image data *D2dpi* is presumed to represent an aerial photo. However, as is evident from the first embodiment, the terminal device *Dterm2* can generate display image data *Ddisp* representing also the 3D objects other than the 3D maps. Therefore, not only the aerial photo, the 2D image data *D2dpi* may represent any other images of buildings, people, or animals, for example.

Further, in the second embodiment, the merged image data *Dbrd* is generated by α-blending, but any other blending processes will generate the merged image data *Dbrd.*

While the invention has been described in detail, the foregoing description is in all aspects illustrative and not restrictive. It is understood that numerous other modifications and variations can be devised without departing from the scope of the invention.

**Claims**

1. A device (Urend1, Urend2) for rendering a polygon and a line, comprising:

an object reception section (1) for receiving object data which defines said polygon or said line by shape;
a mesh reception section (1) for receiving mesh data which represents a shape of a surface onto which said polygon and said line are drawn; and
a rendering processing section (1), wherein
said rendering processing section
maps, based on the object data defining the polygon received by said object reception section and the mesh data received by said mesh reception section, the polygon onto said surface,
draws, based on the object data defining the line received by said object reception section and the mesh data received by said mesh reception section, the line onto said surface.

2. The rendering device according to claim 1, wherein
said object data includes an identification flag indicating which of the polygon and the line is defined thereby by shape,
said rendering processing section
determines, based on the identification flag included in the object data received by said object reception section, which of the polygon or the line is defined thereby by shape,
when the object data received by said object reception section is determined as defining the polygon, the polygon is mapped onto a surface represented by the mesh data received by said mesh reception section, and
when the object data received by said object reception section is determined as defining the line, the line is mapped onto the surface represented by the mesh data received by said mesh reception section.

3. The rendering device according to claim 1, wherein
said mesh data specifies a three-dimensional mesh representing a shape of a ground surface which is used as a basis of a three-dimensional map, and
said object data defines a two-dimensional shape of the polygon and the line to be drawn on said ground surface, and the polygon represents at least a building and a block on said three-dimensional map, and the line represents at least a road and a railroad on said three-dimensional map.

4. The rendering device according to claim 1, wherein said rendering processing section further generates display image data representing a three-dimensional map showing a letter merged onto said ground surface.

5. The rendering device according to claim 1, wherein said rendering processing section saves display image data generated thereby to a reserved storage.

6. The rendering device according to claim 1, further comprising an image reception section (1) for receiving two-dimensional image data representing a two-dimensional image, wherein
said rendering processing section
performs a blending process based on the object data defining the polygon received by said object reception section, and the two-dimensional image data received by said image reception section, and generates merged image data representing a merged image of said polygon and said two-dimensional image,
maps said merged image onto said surface based on the merged image data generated thereby and the mesh data received by said mesh reception section, and generates intermediate image data,
based on the object data defining the line received by said object reception section, the mesh data received by said mesh reception section, and the intermediate data generated thereby, draws a three-dimensional shape of the line on the surface onto which said merged image is mapped.

7. The rendering device according to claim 6, wherein when generating said intermediate image, said image processing section maps said polygon onto a first region of said surface, and maps the two-dimensional image onto a second region which is different from the first region.

8. A method for rendering a polygon and a line, comprising:

a mesh receiving step (S31) of receiving mesh data which represents a shape of a surface onto which said polygon and said line are drawn;

an object receiving step (S32) of receiving object data which defines said polygon or said line by shape;

a mapping step (S41) of mapping, based on the object data defining the polygon received in said object receiving step and the mesh data received in said mesh receiving step, the polygon onto said surface, and

a line rendering step (S47) of drawing, based on the object data defining the line received in said object receiving step and the mesh data received in said mesh receiving step, the line onto said surface.

**9.** The rendering method according to claim 8, wherein

said object data includes an identification flag indicating which of the polygon and the line is defined thereby by shape,

a determining step is further included for determining, based on the identification flag included in the object data received in said object receiving step, which of the polygon or the line is defined thereby by shape, and

when the object data received in said object receiving step is determined as defining the polygon, said mapping step maps the polygon onto said surface based on the object data and the mesh data received in said mesh receiving step.

**10.** The rendering method according to claim 8, wherein

said mesh data specifies a three-dimensional mesh representing a shape of a ground surface which is used as a basis of a three-dimensional map, and

said object data defines a two-dimensional shape of the polygon and the line to be drawn on said ground surface, and the polygon represents at least a building and a block on said three-dimensional map, and the line represents at least a road and a railroad on said three-dimensional map.

**11.** The rendering method according to claim 8, further comprising:

an image receiving step (S51) of receiving two-dimensional image data representing a two-dimensional image; and

a blending step (S52) of performing a blending process based on the object data defining the polygon received in said object receiving step and the two-dimensional image data received in said image receiving step, and generating merged image data representing a merged image of said polygon and said two-dimensional image, wherein

said mapping step maps said merged image onto said surface based on the merged image data generated in said blending step and the mesh data received in said mesh receiving step, and generates intermediate image data,

said line rendering step draws, based on the object data defining the line received in said object receiving step, the mesh data received in said mesh receiving step, and the intermediate image data generated in said mapping step, the line on the surface onto which said merged image is mapped.

**12.** The rendering method according to claim 11, wherein said mapping step maps said polygon onto a first region on said surface, and maps said two-dimensional image onto a second region which is different from the first region.

**13.** A program for realizing a process of rendering a polygon and a line on a computer device, comprising:

a mesh receiving step (S31) of receiving mesh data which represents a shape of a surface onto which said polygon and said line are drawn;

an object receiving step (S32) of receiving object data which defines said polygon or said line by shape;

a mapping step (S41) of mapping, based on the object data defining the polygon received in said object receiving step and the mesh data received in said mesh receiving step, the polygon onto said surface, and

a line rendering step (S47) of drawing, based on the object data defining the line received in said object receiving step and the mesh data received in said mesh receiving step, the line onto said surface.

**14.** The program according to claim 13, wherein

said object data includes an identification flag indicating which of the polygon and the line is defined thereby by shape,

a determining step is further included for determining, based on the identification flag included in the object data received in said object receiving step, which of the polygon or the line is defined thereby by shape, and

when the object data received in said object receiving step is determined as defining the polygon in said determining step, said mapping step maps the polygon onto said surface based on the object data and the mesh data received in said mesh receiving step.

15. The program according to claim 13, wherein
said mesh data specifies a three-dimensional mesh representing a shape of a ground surface which is used as a basis of a three-dimensional map, and
said object data defines a two-dimensional shape of the polygon and the line to be drawn on said ground surface, and the polygon represents at least a building and a block on said three-dimensional map, and the line represents at least a road and a railroad on said three-dimensional map.

16. The program according to claim 13, further comprising:

an image receiving step (S51) of receiving two-dimensional image data representing a two-dimensional image; and
a blending step (S52) of performing a blending process based on the object data defining the polygon received in said object receiving step and the two-dimensional image data received in said image receiving step, and generating merged image data representing a merged image of said polygon and said two-dimensional image, wherein
said mapping step maps said merged image onto said surface based on the merged image data generated in said blending step and the mesh data received in said mesh receiving step, and generates intermediate image data,
said line rendering step draws, based on the object data defining the line received in said object receiving step, the mesh data received in said mesh receiving step, and the intermediate image data generated in said mapping step, the line on the surface onto which said merged image is mapped.

17. The program according to claim 16, wherein said mapping step maps said polygon onto a first region on said surface, and maps said two-dimensional image onto a second region which is different from the first region.

18. The program according to claim 13, said program is recorded on a recording medium.

FIG. 1

```
                                                                    Dterm1
  Urend1                                      TERMINAL DEVICE
 ┌ ─ ─ ─ ─ ─ ─ ─ ─ ─ ─ ─ ─ ─ ─ ─ ─ ─ ─ ─ ─ ─ ─ ─ ─ ─ ┐
 │ RENDERING DEVICE                                    │
 │                      PROGRAM          2             │
 │           1          MEMORY     21                  │
 │     ┌──────────┐ ┌ ─ ─ ─ ─ ─ ─ ┐  ┌──────────┐      │
 │     │          │ │ │COMPUTER  │ │  │ WORKING  │ 3    │
 │     │PROCESSOR │ │ │PROGRAM   │ │  │  AREA    │      │
 │     │          │ │ └──────────┘ │  │          │      │
 │     └────┬─────┘ └ ─ ─ ─┬─ ─ ─ ─┘  └────┬─────┘      │
 │          ↕             │              ↕ Dms,Dpol,    │
 │          │             │                Dlin,Ddisp   │
 └ ─ ─ ─ ─ ─│─ ─ ─ ─ ─ ─ ─│─ ─ ─ ─ ─ ─ ─ ─│─ ─ ─ ─ ─ ─┘
      ◄──────────────────────────────────────►
            ↑ Dms,Dpol,     │ Ddisp
            │ Dlin          │
         ┌──────┐  Ustor   ┌──────┐  Udisp
         │STORAGE│         │DISPLAY│
         │DEVICE │         │       │
         └──────┘          └──────┘
```

FIG. 2

```
 ┌ ─ ─ ─ ─ ─ ─ ─ ─ ─ ─ ─ ─ ─ ─ ─ ─ ─ ─ ─ ─ ┐
 │ WORKING AREA                        3    │
 │                              31          │
 │ ┌──────────────────────────┐             │
 │ │ TEMPORARY STORAGE AREA    │             │
 │ │ (FOR MESHES)              │ 32          │
 │ ├──────────────────────────┤             │
 │ │ TEMPORARY STORAGE AREA    │             │
 │ │ (FOR OBJECTS)             │ 33          │
 │ ├──────────────────────────┤             │
 │ │ TEMPORARY STORAGE AREA    │             │
 │ │ (FOR POLYGON RENDERING)   │ 34          │
 │ ├──────────────────────────┤             │
 │ │ TEMPORARY STORAGE AREA    │             │
 │ │ (FOR 3D IMAGES)           │             │
 │ └──────────────────────────┘             │
 └ ─ ─ ─ ─ ─ ─ ─ ─ ─ ─ ─ ─ ─ ─ ─ ─ ─ ─ ─ ─ ┘
```

# F I G. 3

```
┌─────────────────────────────────┐
│  STORAGE DEVICE        DBmesh    │ Ustor
│  ┌───────────────────┐           │
│  │   MESH            │           │
│  │   DATABASE        │  DBobj    │
│  ├───────────────────┤           │
│  │   OBJECT          │           │
│  │   DATABASE        │           │
│  └───────────────────┘           │
└─────────────────────────────────┘
```

# F I G. 4 A

Pmss    △3d    Pmst    Pmsm

MS

Pmsq    Pmsr

Pms1

Pms2

Z  Y
0  X

# F I G. 4 B

Dms1    Pms1 (Xms1, Yms1, Zms1)    DBmesh

Dms2    Pms2 (Xms2, Yms1, Zms2)

Dmsm    Pmsm (Xmsm, Ymsm, Zmsm)

## F I G. 5 A

DBobj

| OBJECT DATA (POLYGON) — Dpol1 | OBJECT DATA (LINE) — Dlin1 |
| OBJECT DATA (POLYGON) — Dpol2 | OBJECT DATA (LINE) — Dlin2 |
| ⋮ | ⋮ |
| OBJECT DATA (POLYGON) — Dpoln | OBJECT DATA (LINE) — Dlini |

## F I G. 5 B

Dpol1〜Dpoln

| IDENTIFICATION FLAG | BOUNDARY BOX INFORMATION | THE NUMBER OF VERTICES | COLOR INFORMATION | VERTEX COORDINATES STRING |
|---|---|---|---|---|
| Fpoly | Ibdr | Nvtx | Ipcr | Scvx |

## F I G. 5 C

Pbdr2   Pbdr3
Bbdr
Ppl2
Pbdr1    PL
Y
Pbdr4
0   X   Ppl1(Xpl1, Ypl1)   Pplj

F I G. 6 A

$Dlin1 \sim Dlini$

| IDENTIFICATION FLAG | THE NUMBER OF CHARACTERISTIC POINTS | COLOR INFORMATION | CHARACTERISTIC POINT COORDINATES STRING | LINE TYPE INFORMATION |
|---|---|---|---|---|
| Fline | Nchp | Ilcr | Schp | Tline |

F I G. 6 B

# F I G . 7

START

S31
TRANSFER DATA Dms TO
TEMPORARY STORAGE
AREA 31

S32
TRANSFER DATA Dpol,
Dlin TO TEMPORARY
STORAGE AREA 32

S33
·COUNT THE NUMBER Nobj
·VALUE Cobj → 0

S34
No ← Cobj ≦ Nobj ?

Yes

S35
SELECT OBJECT
(DATA Dpol, Dlin)

S36
No ← POLYGON ?

Yes

S37
POLYGON RENDERING
PROCESS (GENERATION
OF DATA Diml)

S38
DELETE SELECTED DATA
Dpol FROM TEMPORARY
STORAGE AREA 32

S39
Cobj → Cobj+1

(A)

F I G. 8

```
                    ( A )
                      │
                      │            ┌─ S40
        ┌─────────────────────────────┐
        │ RENDERING PROCESS OF         │
        │ 3D MESH MS' (GENERATION      │
        │ OF DATA Dim2)                │
        └─────────────────────────────┘
                      │            ┌─ S41
        ┌─────────────────────────────┐
        │ MAP DATA Dim1 TO MESH        │
        │ (GENERATION OF DATA Dim3)    │
        └─────────────────────────────┘
                      │            ┌─ S42
        ┌─────────────────────────────┐
        │ ·COUNT THE NUMBER Nlin       │
        │ ·VALUE Clin → 0              │
        └─────────────────────────────┘
                      │
                      │            ┌─ S43
      No   ╱────────────────────────╲
    ◄──────      Clin ≦ Nlin ?        
             ╲────────────────────────╱
       │              │ Yes      ┌─ S44
 ┌─ S50              ┌─────────────────────────┐
┌──────────────────┐│ SELECT OBJECT           │
│ TRANSMIT DATA     ││ (DATA Dlin)             │
│ Ddisp             │└─────────────────────────┘
│ TO DISPLAY DEVICE ││           ┌─ S45
│ Udisp             │┌─────────────────────────┐
└──────────────────┘│ FETCH PREDETERMINED     │
       │            │ DATA Dms                │
   ( END )          └─────────────────────────┘
                      │            ┌─ S46
        ┌─────────────────────────────┐
        │ PROVIDE HEIGHT hln TO        │
        │ EACH CHARACTERISTIC          │
        │ POINT Pln                    │
        └─────────────────────────────┘
                      │            ┌─ S47
        ┌─────────────────────────────┐
        │ LINE RENDERING PROCESS       │
        │ (GENERATION OF DATA Dim4)    │
        └─────────────────────────────┘
                      │            ┌─ S48
        ┌─────────────────────────────┐
        │ DELETE SELECTED DATA         │
        │ Dlin FROM TEMPORARY          │
        │ STORAGE AREA 32              │
        └─────────────────────────────┘
                      │            ┌─ S49
        ┌─────────────────────────────┐
        │ Clin → Clin+1                │
        └─────────────────────────────┘
                      │
```

FIG. 9A

FIG. 9B

FIG. 10A

FIG. 10B

F I G. 1 1 A

F I G. 1 1 B

FIG. 12

FIG. 13

EP 1 223 558 A2

# F I G. 1 4 A

STORAGE DEVICE — Ustor

| MESH DATABASE | DBmesh |
| OBJECT DATABASE | DBobj |
| 2D IMAGE DATABASE | DB2dpi |

# F I G. 1 4 B

DB2dpi

| 2D IMAGE DATA | D2dpi1 |
| 2D IMAGE DATA | D2dpi2 |
| ⋮ | D2dpim |
| 2D IMAGE DATA | |

# F I G. 1 4 C

D2dpi1 〜 D2dpim

| PIXEL VALUE | PIXEL VALUE | • • • • |

Vpxl1        Vpxl2

24

# FIG. 15

```
                    START

                                            ⌐S51
        TRANSFER DATA D2dpi TO
        TEMPORARY STORAGE AREA 35

                                            ⌐S31
        TRANSFER DATA Dms TO
        TEMPORARY STORAGE AREA 31

                                            ⌐S32
        TRANSFER DATA Dpol, Dlin TO
        TEMPORARY STORAGE AREA 32

                                            ⌐S33
        ·COUNT THE NUMBER Nobj
        ·VALUE Cobj → 0

                                            ⌐S34
  No
              Cobj ≦ Nobj ?

                              Yes           ⌐S35
              ⌐S52          SELECT OBJECT
    α BLENDING            (DATA Dpol, Dlin)

                                            ⌐S36
     A        No              POLYGON ?

                              Yes           ⌐S37
              POLYGON RENDERING PROCESS
              (GENERATION OF DATA Diml)

                                            ⌐S38
              DELETE SELECTED DATA Dpol FROM
              TEMPORARY STORAGE AREA 32

                                            ⌐S39
                    Cobj → Cobj+1
```

FIG. 16

```
                    ┌─────────────┐
                    │    START    │
                    └──────┬──────┘
                           │          ╭─ S61
                  ┌────────┴────────┐
                  │ VALUE Chei → 0  │
                  └────────┬────────┘
                           │          ╭─ S62
         No      ◇─────────┴─────────◇
        ┌────────│    Chei ≧ Ihei ?   │
        │        ◇────────┬─────────◇
   ┌────┴────┐          Yes
   │ RETURN  │                        ╭─ S63
   └─────────┘    ┌────────┴────────┐
                  │ VALUE Cwid → 0  │
                  └────────┬────────┘
                           │          ╭─ S64
     Yes      ◇────────────┴──────────◇
    ┌─────────│     Cwid ≧ Iwid ?     │
    │         ◇────────────┬──────────◇
    │                    No           ╭─ S65
    │         ┌───────────┴──────────┐
    │         │ SELECT VALUE Vrgb_src1│
    │         └───────────┬──────────┘
    │                     │           ╭─ S66
    │         ┌───────────┴──────────┐
    │         │ SELECT VALUE Vrgb_src2│
    │         └───────────┬──────────┘
    │                     │           ╭─ S67
    │      ┌──────────────┴─────────────┐
    │      │ CALCULATE VALUE Vrgb_dest  │
    │      └──────────────┬─────────────┘
    │                     │           ╭─ S68
    │   ┌─────────────────┴──────────────────┐
    │   │ PIXEL VALUE → VALUE Vrgb_src2       │
    │   └─────────────────┬──────────────────┘
    │                     │           ╭─ S69
    │         ┌───────────┴──────────┐
    │         │   Cwid → Cwid + 1    │
    │         └───────────┬──────────┘
    │                     │
    └─────────────────────┤
                          ▼           ╭─ S70
              ┌───────────┴──────────┐
              │   Chei → Chei + 1    │
              └───────────┬──────────┘
```

$$\text{VALUE } Chei \rightarrow 0 \quad S61$$

$$Chei \geqq Ihei \ ? \quad S62$$

$$\text{VALUE } Cwid \rightarrow 0 \quad S63$$

$$Cwid \geqq Iwid \ ? \quad S64$$

$$\text{SELECT VALUE } V_{RGB\_SRC1} \quad S65$$

$$\text{SELECT VALUE } V_{RGB\_SRC2} \quad S66$$

$$\text{CALCULATE VALUE } V_{RGB\_DEST} \quad S67$$

$$\text{PIXEL VALUE} \rightarrow \text{VALUE } V_{RGB\_SRC2} \quad S68$$

$$Cwid \rightarrow Cwid + 1 \quad S69$$

$$Chei \rightarrow Chei + 1 \quad S70$$

FIG. 17

α-BLENDING